# EUROPEAN PATENT APPLICATION

(11) **EP 4 542 854 A1**
(43) Date of publication of application: **23.04.2025**
(21) Application number: 24795875.4
(22) Date of filing: 12.04.2024
(51) Int. Cl.: H02S 50/10

(54) **PHOTOVOLTAIC MODULE DETECTION METHOD AND APPARATUS, COMPUTER DEVICE, AND STORAGE MEDIUM**

(30) Priority: 24.04.2023 CN 202310443427
(71) Applicant: Fantastic Energy & Environment (Zhejiang) Co., Ltd, Hangzhou, Zhejiang 310000 (CN); Jiaxing Research Institute of Zhejiang University, Jiaxing, Zhejiang 314000 (CN)
(72) Inventor: REN, Jiang, Hangzhou, Zhejiang 310000 (CN); SONG, Hong, Hangzhou, Zhejiang 310000 (CN); QIN, Xiangxi, Hangzhou, Zhejiang 310000 (CN); WANG, Kaiwei, Jiaxing, Zhejiang 314000 (CN); CHEN, Weiling, Hangzhou, Zhejiang 310000 (CN); ZHU, Xiaowei, Jiaxing, Zhejiang 314000 (CN)
(74) Representative: Zaboliene, Reda
(86) International application number: PCT/CN2024/087616
(87) International publication number: WO 2024/222494

(57) **Abstract**

The present application relates to a photovoltaic module detection method and apparatus, a computer device, and a storage medium. The detection method comprises: receiving detection data for each photovoltaic module of each photovoltaic power station; labeling the detection data in a pre-prepared electronic map, generating a labeled electronic map; and using the labeled electronic map, generating a detection report of global photovoltaic module yield and defect distribution. The detection apparatus comprises: a data receiving module for receiving photovoltaic module detection data; a map labeling module for labeling the detection data in a pre-prepared electronic map, generating a labeled electronic map; and a report generation module which uses the labeled electronic map to generate a detection report of global photovoltaic module yield and defect distribution. In the detection method of the present application, the detection process does not require disassembling photovoltaic modules, and there is no need to power-on the photovoltaic modules for detection, thereby greatly improving test efficiency, and allowing for operation during the day and at night; and improving detection precision and efficiency.

## Description

### TECHNICAL FIELD

This application relates to the field of photovoltaic power station detection technology, and more particularly to a photovoltaic module detection method, apparatus, computer device, and storage medium.

### BACKGROUND

Photovoltaic power stations are widely used. In order to better ensure the efficiency of photovoltaic power generation, it is necessary to regularly inspect the photovoltaic modules of the power station. The current common method is to mark while detecting. Since photovoltaic modules are easily damaged by human construction, disassembly detection may cause secondary damage/injury due to disassembly and reassembly, which will further reduce the service life of the photovoltaic modules. The method of marking while detecting requires a large amount of manual cooperation, resulting in low detection efficiency and the need for a large amount of manpower and material resources. The detection cost is high, and it is difficult to ensure the accuracy of detection due to factors such as visual fatigue.

### SUMMARY OF THE DISCLOSURE

This application provides a photovoltaic module detection method, apparatus, computer device, and storage medium, which can quickly and accurately locate photovoltaic modules with faults, and significantly reduce detection costs while ensuring rapid and precise detection.

The photovoltaic module detection method provided by this application includes the following steps:
step S11, receiving a detection data of each photovoltaic module from various photovoltaic power stations;
step S12, marking the detection data on a pre-prepared electronic map to generate the electronic map with markings;
step S13, using the electronic map with markings to generate a detection report on the yield and defect distribution of global photovoltaic modules.

In one embodiment, before the step S11, the method includes: configuring at least one set of RTK positioning devices and detection devices for a global photovoltaic power stations;
before starting the detection devices, using the RTK positioning devices to pre-prepare the electronic map of the global photovoltaic modules.

In one embodiment, the photovoltaic power station is also equipped with a movable device, the detection devices and the RTK positioning devices are installed on the movable device and move with it; before step S11, the method further includes:
assigning a scheduled movement task for the movable device;
assigning a scheduled detection task for the detection devices and the RTK positioning devices;
and the scheduled movement task and the scheduled detection task are executed synchronously.

In one embodiment, the detection devices include a collection device and an information processor; the collection device is composed of multiple collection points; before step S11, the method further includes:
starting the information processor, the collection device, and the RTK positioning devices according to the scheduled detection task;
collecting on-site data of each photovoltaic module through the collection device;
obtaining the position data of the photovoltaic module through the RTK positioning device;
binding the on-site data of the photovoltaic module with the position data through the information processor, and then performing;
defect detection on the on-site data of the photovoltaic module to generate detection data with position data and detection results.

In one embodiment, after step S11, the method includes: processing the detection data with lossless compression technology to obtain low-traffic detection data;
outputting the low-traffic detection data using 5G network technology.

In one embodiment, step S12 includes:
receiving low-traffic detection data;
according to the position data in the detection data, finding the corresponding photovoltaic module in the electronic map;
marking the detection results on the photovoltaic module to generate the marked electronic map.

The photovoltaic module detection apparatus provided by this application can move in the photovoltaic power station, and includes:
a data receiving module, used for receiving a detection data of each photovoltaic module from various photovoltaic power stations;
a map marking module, used for marking the detection data on the pre-prepared electronic map to generate the marked electronic map;
a report generating module, used for generating a detection report on the yield and defect distribution of global photovoltaic modules using the marked electronic map; the data receiving module and the map marking module are set in the control box.

In one embodiment, the detection apparatus includes a beam, walking components set at both ends of the beam and electrically connected with the beam, the walking components include walking wheels and tracks meshing with the walking wheels, the tracks can walk along the upper surface of the photovoltaic power station; the control box is set on the beam; the beam is further equipped with RTK positioning devices and detection devices.

In one embodiment, the RTK positioning device includes a host and an RTK antenna, at least one near-infrared light source is set at the front end of the beam, and several near-infrared high-frame-rate global CCD cameras are set on the beam behind the near-infrared light source; a protective cover is set on the beam, the near-infrared light source and the near-infrared high-frame-rate global CCD cameras are located inside the protective cover.

In one embodiment, a partition is set inside the protective cover along the extension direction of the beam, the partition divides the space inside the protective cover into a first space and a second space located above the first space, the near-infrared light source is set in the first space and close to the front end of the beam, several near-infrared high-frame-rate global CCD cameras are set in the second space and are assembled at fixed intervals on the partition.

In one embodiment, the RTK antenna includes at least two RTK antennas set at the front and back positions of the protective cover, and an antenna controller is set between the RTK antennas to receive the signals sent by the RTK antennas and decompose the positioning information and heading.

In one embodiment, the protective cover includes a first protective cover and a second protective cover set above the top of the first protective cover, the near-infrared light source is set in the first protective cover, and several near-infrared high-frame-rate global CCD cameras are set in the second protective cover.

The computer device provided by this application includes a memory and a processor, the memory stores a computer program, when the processor executes the computer program, it realizes the following steps:
receiving a detection data of each photovoltaic module from various photovoltaic power stations;
marking the detection data on a pre-prepared electronic map to generate the marked electronic map;
using the electronic map with markings to generate a detection report on the yield and defect distribution of global photovoltaic modules.

The computer-readable storage medium provided by this application stores a computer program, when the computer program is executed by a processor, it realizes the following steps:
receiving a detection data of each photovoltaic module from various photovoltaic power stations;
marking the detection data on a pre-prepared electronic map to generate the marked electronic map;
using the electronic map with markings to generate a detection report on the yield and defect distribution of global photovoltaic modules.

The above-mentioned photovoltaic module detection method, apparatus, computer device, and storage medium have the following technical effects compared with the existing technology:
(1) This application dynamically measures and locates photovoltaic modules, then transmits the detection data to the server. There is no need for manual detection of each module. The data is directly transmitted to the backend server, which generates the detection report. This provides technical support for automated detection and realizes diagnostic reports in the form of electronic maps, which are simple, clear, and easy to understand, with high reference value.
(2) This application uses RTK technology for photovoltaic module detection, applying precise positioning technology to photovoltaic technology, achieving a qualitative leap. The positioning accuracy is reduced from 10m of existing GPS, Beidou and other navigation technologies to 2-3cm, providing strong technical support for automated positioning detection. The automatically marked electronic map is simpler, more convenient, and more intuitive than manual marking, saving a lot of manpower and material resources, and is more scientific and convincing.
(3) The detection technology provided by this application replaces the cumbersome work of manually marking defective areas in conventional detection. RTK technology is used for positioning, and the detection data of photovoltaic modules is transmitted to the server to generate an easy-to-understand marked electronic map for users, providing strong technical support for later maintenance, care, and repair.
(4) This application uses RTK positioning technology to locate the detection data of each photovoltaic module, and transmits it to a high-performance computer server through a 5G network. Based on the positioning data of each detection data, a marked electronic map with detection results is generated and visually presented to users, providing directional guidance for maintenance personnel and a set of automatic navigation functions combined with RTK technology. In addition, since there is no need to disassemble photovoltaic modules during the measurement process, and no need for power detection of photovoltaic modules, the testing efficiency is greatly improved, and it can work both day and night.
(5) The detection device is set on a crawler vehicle, which can meet the standard range of pressure on photovoltaic module components, and at the same time, it avoids the phenomenon of slipping down the slope by relying on the friction between the crawler and the photovoltaic module components, ensuring that the vehicle can adapt to various types of power stations.

### BRIEF DESCRIPTION OF THE DRAWINGS

To more clearly illustrate the technical solutions in the embodiments of this application, the following is a brief introduction to the accompanying drawings used in the description of the embodiments. It is evident that the accompanying drawings described below are merely some embodiments of this application. For those of ordinary skill in the art, other drawings can also be obtained based on these drawings without creative work.
FIG. 1 is a global application environment diagram of the photovoltaic module detection method in one embodiment;
FIG. 2 is an apparatus connection application environment diagram of the photovoltaic module detection method in one embodiment;
FIG. 3 is a schematic diagram of the RTK technology principle in one embodiment;
FIG. 4 is a flowchart of the photovoltaic module detection method in one embodiment;
FIG. 5 is a three-dimensional assembly diagram of the photovoltaic module detection apparatus in one embodiment;
FIG. 6 is an internal structure diagram of the computer device in one embodiment.

### DETAILED DESCRIPTION

To more clearly illustrate the purpose, technical solutions, and advantages of this application, the following is a further detailed description of this application in conjunction with the accompanying drawings and embodiments. It should be understood that the specific embodiments described here are merely used to explain this application and are not intended to limit this application.

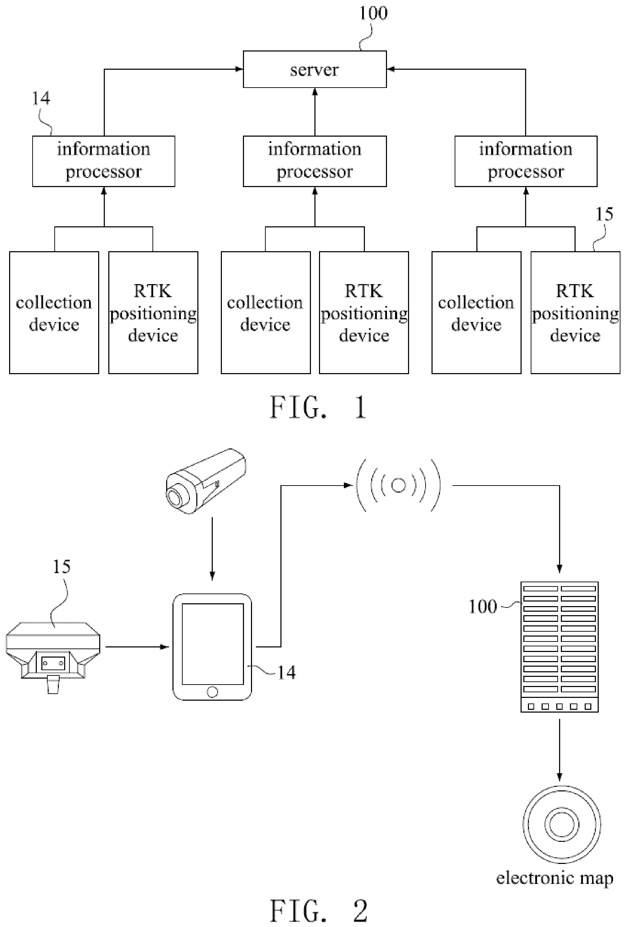

Please refer to FIGs. 1 and 2, which are schematic diagrams of the implementation scenarios involved in this invention. The implementation scenario includes a server 100, information processors 14 distributed at various photovoltaic sites, collection devices, and RTK (Real Time Kinematic, Full name Real-time kinematic, abbreviation for GPS real-time dynamic positioning) positioning devices 15. The collection devices and RTK positioning devices 15 execute corresponding work tasks synchronously, and the task objects remain consistent. In this embodiment, the server 100 is connected to several information processors 14, each of which is connected to the corresponding collection devices and RTK positioning devices 15. The RTK positioning devices 15 are used to draw an electronic map of each photovoltaic module in the global photovoltaic power station. In this embodiment, each photovoltaic module has unique position data. The collection devices collect on-site data of each photovoltaic module, and the RTK positioning devices obtain the position data corresponding to the on-site data. The information processor associates the on-site data with the position data, and then performs defect detection on the on-site data to obtain detection results about the hidden crack information of the photovoltaic module, generating detection data with position data and detection results. The detection data is matched with the pre-prepared electronic map, and the detection results are marked on the electronic map of the corresponding photovoltaic module, so that the yield and defect distribution of the global photovoltaic modules can be obtained according to the marked electronic map.

This embodiment uses RTK technology to obtain the position data of each photovoltaic module. After completing the defect detection of the photovoltaic module, the detection data with position data is transmitted to the server through a 5G network. The server can then directly issue a detection report of the photovoltaic module. According to the detection report, there is no need to manually search for each module with defects, which can quickly locate the photovoltaic module with defects, thereby quickly assisting the repair or maintenance of the photovoltaic module. In addition, since there is no need to disassemble the photovoltaic module during the measurement process, and there is no need to power the photovoltaic module for detection, the testing efficiency is greatly improved, and it can work both day and night.

The precision of existing GPS, Beidou and other navigation technologies can reach 10m, while the normal size of a photovoltaic module is about 2.2*1.2m2. Therefore, GPS, Beidou and other navigation technologies cannot provide accurate positioning for photovoltaic modules, that is, they cannot find the specific photovoltaic module.

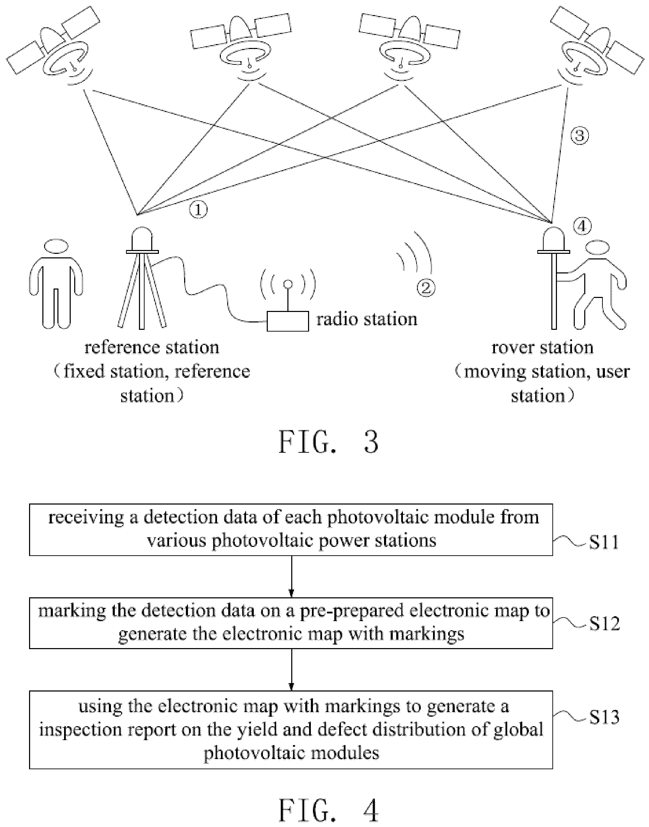

The illustrative embodiment of this application adopts RTK technology, combined with detection technology, to achieve the purpose of dynamic measurement, which can obtain accurate positioning data corresponding to the measurement results in real time. As shown in FIG. 3, the schematic diagram of the RTK technology principle, the RTK technology consists of three parts: the reference station receiver, the data link, and the rover station receiver. Its measurement accuracy can be precise to 1-2cm in the X and Y directions, and 2-3cm in the H direction, so it can effectively solve the positioning problem of photovoltaic modules. The illustrative embodiment of this application uses RTK technology to achieve dynamic measurement of photovoltaic module defect detection.

Please refer to FIG. 4. In one embodiment, a photovoltaic module detection method is provided, which includes the following steps:
Step S11, receiving a detection data of each photovoltaic module from various photovoltaic power stations.
Step S12, marking the detection data on a pre-prepared electronic map to generate the electronic map with markings.
Step S13, using the electronic map with markings to generate a detection report on the yield and defect distribution of global photovoltaic modules.
Step S11, receiving a detection data of each photovoltaic module from various photovoltaic power stations; wherein, a photovoltaic power station refers to a power generation system that uses solar energy and specific materials (such as crystalline silicon plates, inverters and other electronic components) to generate electricity, is connected to the power grid, and transmits electricity to the power grid. Photovoltaic modules include efficient crystalline silicon solar cells, ultra-white textured tempered glass, EVA, TPT backsheet, and aluminum alloy frames. They convert solar radiation energy into electrical energy directly or indirectly through the photoelectric effect or photochemical effect by absorbing sunlight.

Before step S11, it includes: configuring at least one set of RTK positioning devices and detection devices for the global photovoltaic power stations; before starting the detection devices, using the RTK positioning devices to pre-prepare an electronic map of the global photovoltaic modules. In this embodiment, each photovoltaic power station is equipped with at least one set of RTK positioning devices and detection devices. The RTK positioning devices can use existing RTK surveyors on the market to obtain the position data of each photovoltaic module to prepare an electronic map of the global photovoltaic modules.

In one embodiment, the photovoltaic power station is also equipped with a movable device, and the detection devices and RTK positioning devices are installed on the movable device and move with it, thereby achieving the purpose of dynamic measurement.

Further explanation, before step S11, it also includes: assigning a scheduled movement task for the movable device, and assigning a scheduled detection task for the detection devices and RTK positioning devices, and the scheduled movement task and the scheduled detection task are executed synchronously.

For example, in one embodiment, the movable device can be a cleaning robot, and the scheduled movement task can include a scheduled cleaning task.

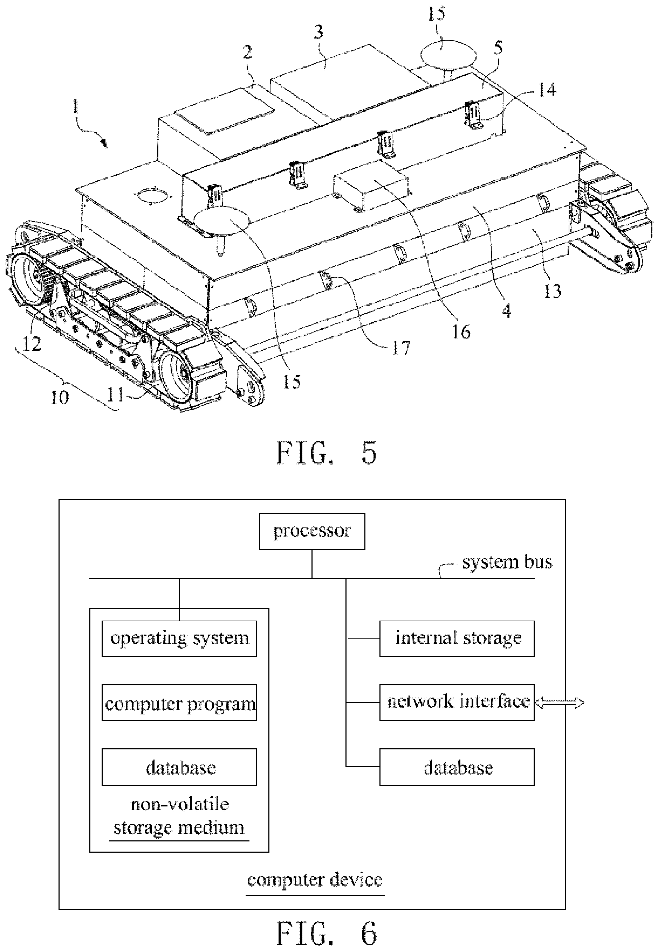

Specifically, please refer to FIG. 5. The movable device in this application, that is, the photovoltaic module detection device is a cleaning robot, which includes a beam 13 and walking components 10 set at both ends of the beam 13 and electrically connected with the beam 13. The walking components 10 includes walking wheels 11 and tracks 12 meshing with the walking wheels 11, and the tracks 12 can walk along the upper surface of the photovoltaic power station; the beam 13 is equipped with a control box 2, RTK positioning devices 15 and detection devices. The control box 2 is equipped with at least a data receiving module and a map marking module. The report generating module can be set in the control box or the background processor according to different needs. Among them: the data receiving module is used to receive detection data of photovoltaic modules from various photovoltaic power stations; the map marking module is used to mark the detection data on the pre-prepared electronic map to generate a marked electronic map; the report generating module is used to generate a detection report on the yield and defect distribution of global photovoltaic modules using the marked electronic map.

The detection device includes a collection device and an information processor 14; the collection device is composed of multiple collection points to form a camera cluster. In this application, the collection device is an industrial near-infrared high-frame-rate global CCD camera. The information processor 14 uses CCD vision detection technology to send the on-site data captured by the collection device to a dedicated image processing system in the form of image signals. It converts pixel distribution, brightness, color and other information into digital signals, and then extracts target features, such as area, quantity, position, length. According to the preset allowable range and other conditions, including size, angle, quantity, pass/fail, presence/absence, etc., automatic identification function is realized, thereby obtaining the hidden crack information on the photovoltaic module. The terminal device uses the obtained RTK positioning data to continuously adjust the position of the detection device to automatically patrol along the preset path.

The beam 13 can be a frame structure or a plate structure, as long as it can realize the assembly of the control box 2, RTK positioning devices and detection devices, and at the same time reduce the overall weight of the photovoltaic module detection device. The beam can also be made of lightweight materials to reduce the overall weight.

In this embodiment, the RTK positioning device includes a host and an RTK antenna. The RTK antenna includes at least two RTK antennas set at the front and back positions of the protective cover. An RTK antenna controller 16 is set between the RTK antennas to receive the signals sent by the RTK antennas and decompose the positioning information and heading. The distance between the two RTK antennas is more than 1m. At least one near-infrared light source 17 is set at the front end of the beam 13. To achieve better shooting and detection effects, the near-infrared light source is a strip light source. In this embodiment, near-infrared light sources are set at both the front and rear ends of the beam. Several near-infrared high-frame-rate global CCD cameras are set on the beam 13 behind the near-infrared light source 17. In this embodiment, 4 numbers of near-infrared high-frame-rate global CCD cameras are set in parallel and at equal intervals; a protective cover is set on the beam 13, and the near-infrared light source 17 and the near-infrared high-frame-rate global CCD camera are located inside the protective cover. The front end of the beam specifically refers to the corresponding end whose extension direction is the same as the forward direction of the detection device. The left and right ends of the beam refer to the corresponding ends whose extension direction is perpendicular to the forward direction of the detection device. The beam 13 is also equipped with a battery 3, which provides power for the control box 2, walking components 10, RTK positioning devices 15, near-infrared light source 17, and near-infrared high-frame-rate global CCD camera. The battery 3 can be a photovoltaic battery or a storage battery.

A partition is set inside the protective cover along the extension direction of the beam. The partition divides the space inside the protective cover into a first space and a second space located above the first space. The near-infrared light source 17 is set in the first space and close to the front end of the beam. The several near-infrared high-frame-rate global CCD cameras are set in the second space and are assembled at fixed intervals on the partition. The purpose of setting the near-infrared light source 17 in the first space and close to the front end and rear end of the beam is to make the lighting area larger and cover the area of at least three single photovoltaic modules in the direction of the detection device's movement. At the same time, according to the speed of the movable device and the coverage of the camera, the components are photographed regularly to ensure that each photovoltaic module is photographed clearly and its details are displayed, ensuring the accurate results of hidden crack detection.

In another embodiment, the protective cover includes a first protective cover 4 and a second protective cover 5 set above the top of the first protective cover 4. The near-infrared light source 17 is set in the first protective cover 4, and the several near-infrared high-frame-rate global CCD cameras are set in the second protective cover 5. The purpose of setting the protective cover in this application is to protect the near-infrared light source 17 and the near-infrared high-frame-rate global CCD camera of the detection device from environmental damage, such as avoiding the influence of rainwater, dust, light and other factors on the photography effect, thereby affecting the accuracy of detection.

Further explanation, before step S11, it also includes: starting the detection devices, collection devices and RTK positioning devices according to the scheduled detection task; the collection devices collect on-site data of each photovoltaic module; the RTK positioning devices obtain the position data of the photovoltaic module; the information processor associates the on-site data of the photovoltaic module with the position data, and then performs defect detection on the on-site data of the photovoltaic module to generate detection data with position data and detection results.

In this embodiment, in the step of defect detection of the on-site data of the photovoltaic module, the hidden crack information of the photovoltaic module is detected. Hidden crack information refers to the hidden cracks that are not easily detected by the naked eye when the photovoltaic module is subjected to a large mechanical or thermal stress. Existing hidden cracks include tree-like cracks, comprehensive cracks, oblique cracks, parallel to the main grid lines, perpendicular to the grid lines and cracks that penetrate the entire photovoltaic module. The current generated by the photovoltaic module relies on "the main grid lines on the surface and the fine grid lines perpendicular to the main grid lines" to collect and conduct electricity. When the hidden crack information causes the fine grid lines to break, the fine grid lines cannot transport the collected current to the main grid lines, which will cause partial or even complete failure of the photovoltaic module.

The core part of the conventional photovoltaic module includes a semiconductor PN junction. Under the condition of no other excitation (such as light, voltage, temperature), its internal is in a dynamic equilibrium state, and the number of electrons and holes is relatively stable. If voltage is applied, the internal electric field of the semiconductor will be weakened, the electrons in the N area will be pushed to the P area and recombined with the holes in the P area (it can also be understood that the holes in the P area are pushed to the N area and recombined with the electrons in the N area), and after recombination, they are radiated in the form of light, that is, electroluminescence. When a forward bias is applied, the crystal silicon battery will emit light, with a wavelength of about 1100nm, which belongs to the infrared band and cannot be observed by the naked eye. During defect detection, the CCD camera is used to capture the emitted photons, and after processing, they are displayed in the form of images.

After the voltage is applied to the silicon crystal in the photovoltaic module, the more the number of electrons and holes recombined, the more photons will be emitted, and the brighter the detected hidden crack information will be; if some areas have darker hidden crack information, it means that the number of electrons and holes generated in that area is less, indicating that there are defects in that area; if some areas are completely dark, it means that there is no recombination of electrons and holes in that area, or the emitted light is blocked by other obstacles, and the signal cannot be detected.

In one embodiment, after step S11, it includes: processing the detection data with lossless compression technology to obtain low-traffic detection data; using 5G network technology to output the low-traffic detection data.

The lossless compression technology in this embodiment can include but is not limited to LZ77 algorithm, LZR algorithm, LZSS algorithm, DEFLATE algorithm, LZMA algorithm. The detection data is transmitted to the server, and the server generates a detection report corresponding to each position according to the preset display rules.

Step S12, marking the detection data on the pre-prepared electronic map to generate a marked electronic map; step S12 includes: receiving low-traffic detection data; according to the position data in the detection data, finding the corresponding photovoltaic module in the electronic map; marking the detection results on the photovoltaic module.

Step S13, using the electronic map with markings to generate a detection report on the yield and defect distribution of global photovoltaic modules.

In the above photovoltaic module detection method, compared with the existing photovoltaic detection technology, it provides strong data transmission support for the automation of photovoltaic power station hidden crack defect detection technology.

This embodiment dynamically measures and locates photovoltaic modules, and then transmits the detection data to the server. There is no need to manually inspect each module one by one. The data is directly transmitted to the background server, which directly generates a detection report, providing technical support for automated detection. It also realizes diagnostic reports in the form of electronic maps, which are simple, clear and easy to understand, with high reference value.

This embodiment uses RTK technology for hidden crack detection of photovoltaic modules, applying precise positioning technology to photovoltaic technology, achieving a qualitative leap. The positioning accuracy is reduced from 10m of existing GPS, Beidou and other navigation technologies to 2-3cm, providing strong technical support for automated positioning detection. The automatically marked electronic map is simpler, more convenient and more intuitive than manual marking, saving a lot of manpower and material resources, and is more scientific and convincing.

The detection technology provided in this embodiment replaces the cumbersome work of manually marking defective areas in conventional detection. RTK technology is used for positioning, and the detection data of photovoltaic modules is transmitted to the server to generate an easy-to-understand marked electronic map for users, providing strong technical support for later maintenance, care and repair.

In this embodiment, RTK positioning technology is used to locate the detection data of each photovoltaic module, and it is transmitted to a high-performance computer server through a 5G network. According to the positioning data of each detection data, a marked electronic map with detection results is generated and visually presented, providing directional guidance for maintenance personnel and a set of automatic navigation functions combined with RTK technology.

It should be understood that, although the steps in FIG. 2 are shown in sequence according to the arrows, these steps are not necessarily executed in the order indicated by the arrows. Unless explicitly stated in this article, there is no strict order limit on the execution of these steps, and they can be executed in other orders. Moreover, at least part of the steps in FIG. 2 can include multiple sub-steps or stages, which do not necessarily have to be completed at the same time, but can be executed at different times. The execution order of these sub-steps or stages is not necessarily sequential, but can be alternated or executed in turns with other steps or sub-steps or stages of other steps.

The specific limitations of the photovoltaic module detection device can refer to the above description of the photovoltaic module detection method, and will not be repeated here. The various modules of the above photovoltaic module detection device can be implemented in whole or in part through software, hardware and their combinations. The above modules can be embedded in or independent of the processor of the computer device in hardware form, or can be stored in the storage of the computer device in software form, so as to enable the processor to call and execute the operations corresponding to the above modules.

In one embodiment, a computer device is provided, which can be a server, and its internal structure diagram can be as shown in FIG. 6. The computer device includes a processor, a storage, a network interface and a database connected through a system bus. Among them, the processor of the computer device is used to provide computing and control capabilities. The storage of the computer device includes a non-volatile storage medium and an internal storage. The non-volatile storage medium stores an operating system, a computer program and a database. The internal storage provides an environment for the operation of the operating system and the computer program in the non-volatile storage medium. The database of the computer device is used to store detection data. The network interface of the computer device is used to communicate with external terminals through a network. The computer program is executed by the processor to realize a photovoltaic module detection method.

Those skilled in the art can understand that the structure shown in FIG. 6 is only a block diagram of part of the structure related to the solution of this application, and does not constitute a limitation on the computer device to which the solution of this application is applied. The specific computer device can include more or fewer components than shown in the FIG., or combine certain components, or have different component arrangements.

In one embodiment, a computer device is provided, which includes a storage and a processor. The storage stores a computer program. When the processor executes the computer program, it realizes the following steps:
Receiving a detection data of each photovoltaic module from various photovoltaic power stations; Marking the detection data on a pre-prepared electronic map to generate the electronic map with markings; Using the electronic map with markings to generate a detection report on the yield and defect distribution of global photovoltaic modules.

In one embodiment, a computer-readable storage medium is provided, which stores a computer program. When the computer program is executed by the processor, it realizes the following steps:
Receiving a detection data of each photovoltaic module from various photovoltaic power stations;
Marking the detection data on a pre-prepared electronic map to generate the electronic map with markings;
Using the electronic map with markings to generate a detection report on the yield and defect distribution of global photovoltaic modules.

Ordinary technical personnel in this field can understand that the implementation of the above-mentioned implementation method of this application can be completed by instructing relevant hardware through a computer program. The computer program can be stored in a non-volatile computer-readable storage medium. When the computer program is executed, it can include the process of the above-mentioned implementation method of each embodiment. The storage, storage, database or other media mentioned in each embodiment of this application can include non-volatile and/or volatile memory. Non-volatile memory can include read-only memory (ROM), programmable ROM (PROM), electrically programmable ROM (EPROM), electrically erasable programmable ROM (EEPROM) or flash memory. Volatile memory can include random access memory (RAM) or external high-speed buffer memory. As an illustration rather than a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchronous link (Synchlink) DRAM (SLDRAM), Rambus direct RAM (RDRAM), direct Rambus dynamic RAM (DRDRAM), and Rambus dynamic RAM (RDRAM), etc.

The technical features of the above embodiments can be combined arbitrarily. In order to make the description concise, not all possible combinations of the technical features in the above embodiments are described. However, as long as there is no contradiction in the combination of these technical features, they should be considered within the scope of this description.

The above-mentioned embodiments only express several implementation ways of this application, and their description is relatively specific and detailed, but it cannot be therefore understood as a limitation on the scope of the invention patent. It should be pointed out that for those ordinary technical personnel in this field, on the premise of not departing from the conception of this application, several deformations and improvements can also be made, and these all belong to the protection scope of this application.

## Claims

1. A photovoltaic module detection method, **characterized in that**, the method comprises:
step S11, receiving a detection data of each photovoltaic module from various photovoltaic power stations;
step S12, marking the detection data on a pre-prepared electronic map to generate the electronic map with markings;
step S13, using the electronic map with markings to generate a detection report on the yield and defect distribution of global photovoltaic modules.

2. The photovoltaic module detection method according to claim 1, **characterized in that**, before the step S11, the method comprises:
configuring at least one set of RTK positioning devices and detection devices for a global photovoltaic power stations;
before starting the detection devices, using the RTK positioning devices to pre-prepare the electronic map of the global photovoltaic modules.

3. The photovoltaic module detection method according to claim 1, **characterized in that**, a photovoltaic power station is also equipped with a movable device, the detection devices and the RTK positioning devices are installed on the movable device and move with the movable device; before the step S11,the method also comprises:
assigning a scheduled movement task for the movable device;
assigning a scheduled detection task for the detection devices and the RTK positioning devices;
and the scheduled movement task and the scheduled detection task are executed synchronously.

4. The photovoltaic module detection method according to claim 3, **characterized in that**, the detection devices comprise a collection device and an information processor; the collection device is composed of multiple collection points; before the step S11, the method also comprises:
starting the detection devices, the collection device, and the RTK positioning devices according to the scheduled detection task;
collecting an on-site data of each photovoltaic module through the collection device;
obtaining a position data of the photovoltaic module through the RTK positioning devices;
binding the on-site data of the photovoltaic module with the position data through the information processor, and then performing defect detection on the on-site data of the photovoltaic module to generate detection data with the position data and detection results.

5. The photovoltaic module detection method according to claim 1, **characterized in that**, after the step S11, the method comprises:
processing the detection data with lossless compression technology to obtain low-traffic detection data;
outputting the low-traffic detection data using 5G network technology.

6. The photovoltaic module detection method according to claim 1, **characterized in that**, the step S12 comprises:
receiving a low-traffic detection data;
according to a position data in the detection data, finding a corresponding photovoltaic module in the electronic map;
marking detection results on the photovoltaic module to generate the electronic map with the markings.

7. A photovoltaic module detection apparatus, **characterized in that**, the detection apparatus is moveable in a photovoltaic power station, and the apparatus comprises:
a data receiving module, configured to receive a detection data of each photovoltaic module from various photovoltaic power stations;
a map marking module, configured to mark the detection data on a pre-prepared electronic map to generate the electronic map with markings;
a report generating module, configured to generate a detection report on the yield and defect distribution of global photovoltaic modules using the electronic map with markings; the data receiving module and the map marking module are set in a control box.

8. The photovoltaic module detection apparatus according to claim 7, **characterized in that**, the apparatus comprises a beam, walking components set at both ends of the beam and electrically connected with the beam, the walking components comprise walking wheels and tracks meshing with the walking wheels, the tracks can walk along an upper surface of the photovoltaic power station; the control box is set on the beam; the beam is equipped with RTK positioning devices and detection devices.

9. The photovoltaic module detection apparatus according to claim 8, **characterized in that**, the RTK positioning device comprises a host and an RTK antenna, at least one near-infrared light source is set at a front end of the beam, and several near-infrared high-frame-rate global CCD cameras are set on the beam behind the near-infrared light source; a protective cover is set on the beam, the near-infrared light source and the near-infrared high-frame-rate global CCD cameras are located inside the protective cover.

10. The photovoltaic module detection apparatus according to claim 9, **characterized in that**, a partition is set inside the protective cover along an extension direction of the beam, the partition divides space inside the protective cover into a first space and a second space located above the first space, the near-infrared light source is set in the first space and close to the front end of the beam, the several near-infrared high-frame-rate global CCD cameras are set in the second space and are assembled at fixed intervals on the partition.

11. The photovoltaic module detection apparatus according to claim 10, **characterized in that**, the RTK antenna comprises at least two RTK antennas set at the front and back of the protective cover, and an antenna controller is set between the RTK antennas to receive signals sent by the RTK antennas and decompose a positioning information and heading.

12. The photovoltaic module detection apparatus according to claim 9, **characterized in that**, the protective cover comprises a first protective cover and a second protective cover set above the top of the first protective cover, the near-infrared light source is set in the first protective cover, and the several near-infrared high-frame-rate global CCD cameras are set in the second protective cover.

13. A computer device, comprising a memory and a processor, the memory stores a computer program, **characterized in that**, when the processor executes the computer program, it realizes the steps of the method according to any one of claims 1 to 6.

14. A computer-readable storage medium, on which a computer program is stored, **characterized in that**, the computer program is configured to be executed by a processor, to realize the steps of the method according to any one of claims 1 to 6.
